# EUROPEAN PATENT APPLICATION

(11) **EP 4 711 939 A1**
(43) Date of publication of application: **18.03.2026**
(21) Application number: 24220008.7
(22) Date of filing: 13.12.2024
(51) Int. Cl.: G06F 12/0868, G06F 12/0888, G06N 20/00

(54) **SYSTEMS FOR TRAINING ARTIFICIAL INTELLIGENCE MODEL AND CHECKPOINT FILE STORAGE METHODS**

(30) Priority: 12.09.2024 CN 202411281883
(71) Applicant: Alipay (Hangzhou) Information Technology Co., Ltd., Hangzhou, Zhejiang 310000 (CN)
(72) Inventor: LIU, Jian, Hangzhou, Zhejiang, 310000 (CN); GU, Shuwei, Hangzhou, Zhejiang, 310000 (CN); ZHAN, Xiaojun, Hangzhou, Zhejiang, 310000 (CN); RUAN, Ruoyi, Hangzhou, Zhejiang, 310000 (CN)
(74) Representative: Fish & Richardson P.C.

(57) **Abstract**

One or more embodiments of this specification provide a system for training an artificial intelligence model and a checkpoint file storage method. The system includes a model training module and a first cache module. The model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module. The first cache module is configured to: identify a type of obtained to-be-stored data; and if the type of the to-be-stored data is a dataset, first write the to-be-stored data into a local buffer, and then store the to-be-stored data in a local hard disk from the local buffer; or if the type of the to-be-stored data is a checkpoint file, directly store the to-be-stored data in the local hard disk.

## Description

### TECHNICAL FIELD

One or more embodiments of this specification relate to the field of artificial intelligence and storage technologies, and in particular, to systems for training an artificial intelligence model and checkpoint file storage methods.

### BACKGROUND

An artificial intelligence (AI) model is gradually becoming a crucial force for promoting scientific and technological progress. The AI model, especially a deep learning model, can automatically extract features from a large amount of data by simulating a structure and a function of a human brain neural network, to learn and predict complex patterns. From speech recognition to image analysis and then to natural language processing, the AI model is widely applied, greatly improves an automation level and efficiency, and becomes a core driving force of innovation in various industries.

In a related technology, a computing node and a cache node are deployed in a site, and the cache node can provide efficient cache services for the computing node. Specifically, the cache node can locally write a dataset needed for training for the computing node to read and use. In addition, in a training process of the AI model, the computing node generates a checkpoint, and writes the checkpoint into the cache node. Compared with direct data interaction with a remote storage system, data interaction between the computing node and the cache node in the same site can greatly improve IO efficiency.

However, in the related technology, it takes an excessively long time for the cache node to write the checkpoint file.

### SUMMARY

In view of this, one or more embodiments of this specification provide the following technical solutions:

According to a first aspect of one or more embodiments of this specification, a system for training an artificial intelligence model is provided and includes a model training module and a first cache module.

The model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module.

The first cache module is configured to: identify a type of obtained to-be-stored data; and if the type of the to-be-stored data is a dataset, first write the to-be-stored data into a local buffer, and then store the to-be-stored data in a local hard disk from the local buffer; or if the type of the to-be-stored data is a checkpoint file, directly store the to-be-stored data in the local hard disk.

According to a second aspect of one or more embodiments of this specification, a checkpoint file storage method in a model training scenario is provided and applied to a first cache module in a system. A model training module is further deployed in the system, and the model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module. The method includes: identifying a type of obtained to-be-stored data; and if the type of the to-be-stored data is a dataset, first writing the to-be-stored data into a local buffer, and then storing the to-be-stored data in a local hard disk from the local buffer; or if the type of the to-be-stored data is a checkpoint file, directly storing the to-be-stored data in the local hard disk.

According to a third aspect of one or more embodiments of this specification, an electronic device is provided and includes: a processor; and a storage, configured to store instructions executable by the processor. The processor runs the executable instructions to implement the steps of the method according to the second aspect.

According to a fourth aspect of one or more embodiments of this specification, a computer-readable storage medium is provided. The computer-readable storage medium stores computer instructions, and when the instructions are executed by a processor, the steps of the method according to the second aspect are implemented.

According to a fifth aspect of one or more embodiments of this specification, a computer program product is provided and includes a computer program/instructions. When the computer program/instructions is/are executed by a processor, the steps of the method according to the second aspect are implemented.

It can be seen from the above-mentioned embodiments that in this specification, the first cache module identifies the type of the obtained to-be-stored data, so that the first cache module can automatically select a more appropriate storage strategy based on an identification result, to satisfy storage demands of different types of data. The to-be-stored data of the dataset type are cached by using a buffer mechanism, to cater to frequent demands of the model training module for reading the dataset, so that the model training module can read the dataset from the buffer instead of the hard disk as much as possible, to improve efficiency of reading the dataset. The to-be-stored data of the checkpoint file type are directly stored in the local hard disk because there is a very low demand for reading the checkpoint file, to avoid an increase, caused due to buffer management overheads, in a time of writing the checkpoint file, and improve efficiency of writing the checkpoint file. In addition, because the training task of the AI model is in a suspended state in a process of writing the checkpoint file, fast writing of the checkpoint helps resume the training task of the AI model as soon as possible, to improve training efficiency of the AI model and improve resource utilization of the model training module.

### BRIEF DESCRIPTION OF DRAWINGS

FIG. 1 is a schematic architectural diagram illustrating an overall hardware system, according to some example embodiments;
FIG. 2 is a schematic diagram illustrating storage of a dataset, according to some example embodiments;
FIG. 3 is a schematic diagram illustrating storage of a checkpoint file, according to some example embodiments;
FIG. 4 is another schematic diagram illustrating storage of a checkpoint file, according to some example embodiments;
FIG. 5 is a flowchart illustrating a checkpoint file storage method in a model training scenario, according to some example embodiments;
FIG. 6 is a schematic structural diagram illustrating a device, according to some example embodiments; and
FIG. 7 is a block diagram illustrating a checkpoint file storage apparatus in a model training scenario, according to some example embodiments.

### DESCRIPTION OF EMBODIMENTS

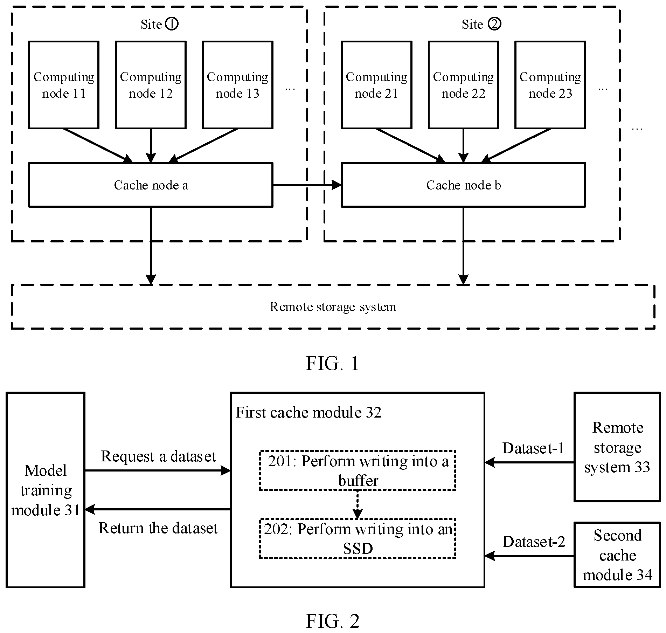

FIG. 1 is a schematic architectural diagram illustrating an overall hardware system, according to some example embodiments. The system can include a first computing node and a first cache node deployed in the same site.

In a general sense, the site can refer to any IT facilities at specific geographical locations, and includes but is not limited to a server room, a data center, or another form. In this specification, each site can be an independent data center, a server room, or even all IT facilities in a specific geographical area. Implementations are not limited in this specification.

The first computing node can be understood as a reference to any computing node. Similarly, the first cache node can also be understood as a reference to any cache node. However, it should be understood that when a computing node is referred to as the first computing node, the corresponding first cache node should be a cache node in a site in which the computing node is located, and cannot be a cache node in another site. For example, as shown in FIG. 1, a computing node 11, a computing node 12, or a computing node 13 in a site ① can be referred to as the first computing node, and the corresponding first cache node should be a cache node a in the site ①, and cannot be a cache node b in a site ② or a cache node in another site. Similarly, a computing node 21, a computing node 22, or a computing node 23 in the site ② can be referred to as the first computing node, and the corresponding first cache node should be the cache node b in the site ②, and cannot be the cache node a in the site ① or a cache node in another site.

Certainly, although a plurality of sites are shown in FIG. 1, and a plurality of computing nodes and one cache node are shown in each site, a quantity of sites, a quantity of computing nodes in the same site, and a quantity of cache nodes in the same site are not limited in this specification. The technical solutions of this specification can be implemented provided that there is a site and a computing node and a cache node are deployed in the site. Certainly, the technical solutions of this specification can also be implemented when there are more sites, more computing nodes, and more cache nodes. Actually, the system can simultaneously include one or more groups of first computing nodes and first cache nodes, and interaction logic between first computing nodes and first cache nodes in all groups is consistent. Therefore, any group of first computing node and first cache node can be used as a logical whole, to help understand the technical solutions of this specification in detail.

The first computing node is configured to execute a training task of an artificial intelligence model. Specifically, a computing unit is disposed on the first computing node, and can be configured to execute the training task of the AI model. For example, in view of advantages of a graphics processing unit (GPU) chip in parallel computing, high memory bandwidth, a large-capacity graphics memory, targeted optimization by a corresponding manufacturer, etc., the computing unit can be constructed based on the GPU chip. Certainly, another chip that has a related processing capability can also be used to construct the computing unit, for example, a tensor processing unit (TPU), a field-programmable gate array (FPGA), or a central processing unit (CPU). Implementations are not limited in this specification.

The computing node 11 is used as an example. In a process of executing the training task of the AI model, the computing node 11 needs to obtain a dataset needed for training, and further needs to store a checkpoint file generated in a training process. In most cases, each site is usually not dedicated to model training of a certain service, and each site needs to be reused on a time-division basis for services based on an actual situation. Therefore, it is impossible to locally store the dataset or the checkpoint file at a certain site for a long time, but the dataset or the checkpoint file is usually stored in a remote storage system serving as a data foundation or a data base. Therefore, the computing node 11 reads the dataset from the remote storage system for the training task, and stores the checkpoint file generated in the training process into the remote storage system. An architecture or a form used by the remote storage system, for example, a data warehouse, a data lake, or a data lakehouse, is not limited in this specification, and does not affect implementation of the technical solutions of this specification.

If the computing node 11 directly obtains the dataset from the remote storage system, and directly writes the checkpoint file into the remote storage system, a data IO link of the computing node 11 is very long, possibly resulting in a relatively high delay. For example, the computing node 11 possibly cannot obtain, in a timely way, the dataset needed for training, resulting in training blocking. For another example, before it is determined that the checkpoint file is successfully persisted to the remote storage system, the training task on the computing node 11 remains suspended, and if the checkpoint file cannot be written in a timely way, long-term training interruption is caused.

Therefore, deployment of a first cache node in a site in which a first computing node is located is provided in this specification. The first computing node reads a dataset needed for training from the first cache node, to execute a training task of an artificial intelligence model by using a computing unit, and in a process of executing the training task, generates a checkpoint file and sends the checkpoint file to the first cache node for storage. It can be seen that to cooperate with the first computing node, the first cache node needs to obtain and store the dataset needed for training for the first computing node to read, and obtain and store the checkpoint file generated by the first computing node.

A local memory and a local hard disk can be disposed on the first cache node. For example, the local hard disk can be a solid-state drive (SSD), a hard disk drive (HDD), or another type of nonvolatile memory. If an SSD or another high-speed memory is used, the first cache node can be referred to as an all-flash cache node. Further, if all cache nodes in all sites in the system are all-flash cache nodes, these all-flash cache nodes can form a logical all-flash cache layer between each computing node and a remote storage system, to optimize data IO between each computing node and the remote storage system.

The first cache node usually stores data by using a buffer mechanism. Specifically, for obtained to-be-stored data, the first cache node first writes, in the first step, the to-be-stored data into a local buffer created in the local memory, and then further stores the to-be-stored data in the local hard disk from the local buffer in the second step. In the second step, data in the local buffer are usually written in batches into the local hard disk when the data in the local buffer satisfy a specific condition (for example, the buffer is full, there is scheduled disk writing, or the system is in an idle period). This process can be referred to as flush.

When a type of the to-be-stored data is a dataset, if the dataset is stored by using the buffer mechanism, the dataset is written into the local buffer of the first cache node. Because the first computing node needs to frequently read the dataset in a training process of the AI model, the buffer mechanism helps improve IO efficiency of the first computing node for the dataset.

However, there is a quite different effect when the type of the to-be-stored data is a checkpoint file. A data amount of the checkpoint file is usually large. Therefore, if the buffer mechanism is still used to store the checkpoint file, very high buffer management overheads are caused. If the checkpoint file also needs to be frequently read, adverse impact caused by the buffer management overheads can be offset to some extent. However, actually, there is a very low demand for reading the checkpoint file, and therefore the adverse impact caused by the buffer management overheads cannot be offset. Actually, storing the checkpoint file based on the buffer mechanism results in a very long time of writing the checkpoint file. It is worthwhile to note that in the process in which the first computing node executes the training task of the AI model, if the checkpoint file is generated, the training task is suspended, and the training task is resumed only after persistence of the checkpoint file is completed. Therefore, when it takes a longer time to write the checkpoint file, training of the AI model is blocked for a longer time, and training efficiency of the AI model is affected.

It can be seen that there are differentiated write demands when different types of data are stored at the first cache node. Therefore, when storing the to-be-stored data, the first cache node can identify the type of the to-be-stored data, and automatically select an appropriate storage strategy based on an identification result, which can also be referred to as automated IO strategy selection. If the type of the to-be-stored data is a dataset, the first cache node performs processing based on the buffer mechanism, that is, first writes the to-be-stored data into the local buffer, and then stores the to-be-stored data in the local hard disk from the local buffer. If the type of the to-be-stored data is a checkpoint file, the first cache node directly stores the to-be-stored data in the local hard disk.

A person skilled in the art can understand that in the above-mentioned embodiments, descriptions are provided around a computing node and a cache node, and a concept of the computing node or the cache node actually belongs to a combination of functional logic at a software level and a processing resource at a hardware level. The processing resource involved can include a computing resource (for example, a GPU resource or a CPU resource), a storage resource (for example, a memory resource or a disk resource), a network resource, etc. Resources are not listed one by one here. In the technical solutions of this specification, functional logic of the first computing node and the first cache node at the software level can be extracted, the functional logic of the first computing node is abstracted as a model training module, and the functional logic of the first cache node is abstracted as a first cache module. Correspondingly, this specification further provides the following system for training an artificial intelligence model. The system includes a model training module and a first cache module.

The model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module.

The first cache module is configured to: identify a type of obtained to-be-stored data; and if the type of the to-be-stored data is a dataset, first write the to-be-stored data into a local buffer, and then store the to-be-stored data in a local hard disk from the local buffer; or if the type of the to-be-stored data is a checkpoint file, directly store the to-be-stored data in the local hard disk.

Therefore, with reference to the above-mentioned descriptions, it can be seen that the first cache module identifies the type of the obtained to-be-stored data, so that the first cache module can automatically select a more appropriate storage strategy based on an identification result, to satisfy storage demands of different types of data. The to-be-stored data of the dataset type are cached by using a buffer mechanism, to cater to frequent demands of the model training module for reading the dataset, so that the model training module can read the dataset from the buffer instead of the hard disk as much as possible, to improve efficiency of reading the dataset. The to-be-stored data of the checkpoint file type are directly stored in the local hard disk because there is a very low demand for reading the checkpoint file, to avoid an increase, caused due to buffer management overheads, in a time of writing the checkpoint file, and improve efficiency of writing the checkpoint file. In addition, because the training task of the AI model is in a suspended state in a process of writing the checkpoint file, fast writing of the checkpoint helps resume the training task of the AI model as soon as possible, to improve training efficiency of the AI model and improve resource utilization of the model training module.

The first cache module can identity the type of the obtained to-be-stored data in any way. Implementations are not limited in this specification. For example, the first cache module can obtain a predetermined data feature of the to-be-stored data, and identify, based on the predetermined data feature, that the type of the to-be-stored data is a dataset or a checkpoint file. The predetermined data feature can be a predefined feature that can represent the type of the to-be-stored data. Implementations are not limited in this specification. For example, the predetermined data feature can include at least one of the following: data type information included in a name, data type information recorded in metadata of the to-be-stored data, a data format, and a value of a type field in a data transmission protocol.

For the name, for example, a name of the dataset may be "training-data-set", and a name of the checkpoint file may be "model-checkpoint file-001". Here, "data-set", "checkpoint file", etc. can be considered as the data type information included in the name, and a person skilled in the art can understand a type of corresponding data based on the data type information.

For the metadata, the dataset or the checkpoint file may include additional metadata, for example, a JSON header or XML description, which may describe a type of corresponding data. For example, the metadata may include a type field, and a value of the type field can be a checkpoint file, a dataset, etc.

For the data format, different data formats are usually used for different data types. For example, the checkpoint file data may be in a .pth format of PyTorch or a .ckpt format of TensorFlow, and the training dataset may be in a CSV format, a TFRecord format, a Parquet format, etc. Therefore, a type of data can be determined based on the format.

For the type field in the data transmission protocol, if the to-be-stored data are transmitted by using a specific network protocol, the protocol may include a field that identifies a data type. For example, an HTTP header or a control field in a custom protocol can be used to indicate the data type.

The first cache module can obtain the to-be-stored data of the dataset type from a remote storage system; and/or the first cache module can write the to-be-stored data of the checkpoint file type into the remote storage system for persistence.

The to-be-stored data of the dataset type are first described below. As described above, the first cache module can obtain the to-be-stored data of the dataset type from the remote storage system. In addition, the first cache module can obtain the to-be-stored data from a second cache module in the system for training an artificial intelligence model. The first cache module and the second cache module can be respectively located in different cache units. For example, the first cache module is located in a first cache unit, the second cache module is located in a second cache unit, and the first cache unit and the second cache unit respectively use different storage resources. The first cache unit and the second cache unit can be located in a same site. Alternatively, the first cache unit and the second cache unit can be respectively located in different sites. For example, the first cache unit is located in a first site, and the second cache unit is located in a second site. The second site is another site different from the first site. Actually, regardless of where the first cache module obtains the to-be-stored data of the dataset type, a storage strategy of the to-be-stored data of the dataset type is not affected. For example, as shown in FIG. 2, the first cache module 32 can obtain the to-be-stored data of the dataset type (for example, a dataset-1) from the remote storage system 33, or can obtain the to-be-stored data of the dataset type (for example, a dataset-2) from the second cache module 34. Certainly, the second cache module 34 can obtain the dataset-2 from the remote storage system 33, or can obtain the dataset-2 from another cache module. Implementations are not limited in this specification.

The first cache module 32 stores the obtained dataset (including the dataset-1 and/or the dataset-2) based on the following steps: In step 201, the first cache module 32 writes the obtained dataset into the buffer. For example, the buffer can be constructed in a memory of a cache node to which the first cache module 32 belongs. In step 202, the first cache module 32 writes the dataset in the buffer into the SSD. In this step, for example, all data in the buffer can be flushed in batches to the SSD. The SSD can be assembled at the cache node to which the first cache module 32 belongs. Based on the storage logic in steps 201 and 202, the model training module 31 can directly perform data IO with the buffer in the memory of the first cache module 32. Therefore, in a scenario in which the dataset is frequently read, it can still be ensured that efficient IO is implemented in a read process, to help improve efficiency of training the AI model by the model training module 31.

The to-be-stored data of the checkpoint file type are described below. As described above, in the process of executing the training task of the AI model, the model training module generates the checkpoint file and sends the checkpoint file to the first cache module. That is, the first cache module can obtain the to-be-stored data of the checkpoint file type from the model training module, to perform local storage. In addition, the first cache module can obtain the to-be-stored data of the checkpoint file type from the second cache module described above. Actually, regardless of where the first cache module obtains the to-be-stored data of the checkpoint file type, a storage strategy of the to-be-stored data of the checkpoint file type is not affected.

After generating the checkpoint file, the model training module suspends the training task of the corresponding AI model until the model training module determines that persistence of the checkpoint file is completed. In an embodiment, the model training module can send the checkpoint file to the first cache module, and the first cache module can directly write the checkpoint file into the local hard disk based on the technical solutions of this specification, and skip writing into the local buffer, and the first cache module can further store the checkpoint file in the remote storage system, and return a write success notification to the model training module after determining that storage is completed, to indicate that persistence of the checkpoint file is completed. Then, after receiving the write success notification, the model training module can resume the training task of the AI model.

In another embodiment, a process in which the first cache module stores the checkpoint file in the remote storage system is usually very stable, and a storage failure probability is very low. Therefore, after writing the checkpoint file into the local hard disk, the first cache module can perform a notification operation and a storage operation in parallel. The notification operation is used to return a write success notification for the checkpoint file to the model training module, to indicate the model training module to resume the training task. The storage operation is used to further store the checkpoint file in the remote storage system. It can be seen that because there is no need to wait for the first cache module to truly store the checkpoint file in the remote storage system, the training task of the model training module can be resumed as soon as possible. This greatly shortens suspension duration of the execution task of the AI model, thereby improving overall training efficiency of the AI model and reducing a waste of computing resources in a suspension process.

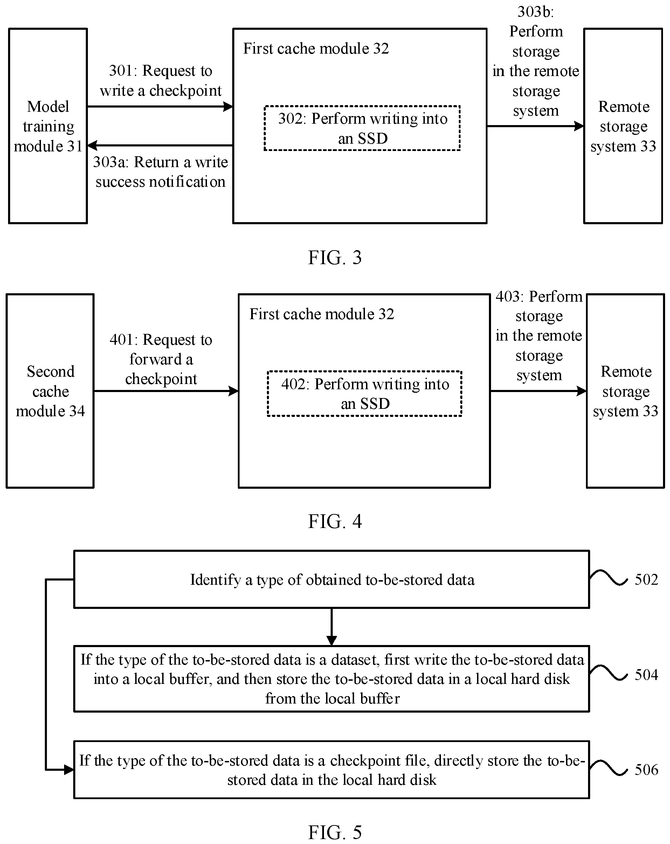

For example, as shown in FIG. 3, in step 301, the model training module 31 can make a request to the first cache module 32 to write the checkpoint file. In step 302, the first cache module 32 can write the checkpoint file from the model training module 31 into the local SSD. In step 303a, when determining that the checkpoint file is written into the local SSD, the first cache module 32 returns a write success notification to the model training module 31, so that the model training module 31 resumes the originally suspended training task of the AI model based on the write success notification. In parallel with step 303a, the first cache module 32 can further store the checkpoint file in the remote storage system from the local SSD in step 303b.

Any cache module can obtain the checkpoint file from the model training module by using the technical solutions described above, and store the checkpoint file in the remote storage system. In this case, the any cache module can store the checkpoint file in the remote storage system by using any form of IO link. Implementations are not limited in this specification. Actually, because the write success notification is returned to the corresponding model training module, the model training module can resume the training task of the AI model. Therefore, a time consumed for storing the checkpoint file in the remote storage system by the any cache module may not be considered too much because in this case, training of the AI model is not blocked.

Descriptions are provided from a perspective of the first cache module. In an embodiment, the first cache module can directly send the checkpoint file to the remote storage system for storage. Transmission logic in this solution is relatively simple. The cache node a shown in FIG. 1 is still used as an example. Assume that the first cache module is located on the cache node a, and an IO link can be directly established between the cache node a and the remote storage system. In this case, the first cache module can write the checkpoint file, for example, from the model training module (for example, located on the computing node 11), to the remote storage system based on the IO link. Certainly, a person skilled in the art knows that the IO link directly established between the cache node a and the remote storage system should be understood as a logical link. That is, logically, one end of the IO link is the cache node a and the other end is the remote storage system. However, physically, forwarding through several network devices usually needs to be performed.

In another embodiment, the first cache module can obtain the to-be-stored data of the checkpoint file type from the second cache module. The first cache module and the second cache module can be respectively located on any two different cache nodes, and the two cache nodes can be located in the same site or different sites. From a perspective of the second cache module, after obtaining the checkpoint file from a certain model training module, the second cache module can directly send the checkpoint file to the remote storage system based on the above-mentioned embodiment, or can transmit, through forwarding, the checkpoint file to the remote storage system in the following way: The second cache module can send the checkpoint file to the first cache module, and the first cache module stores the checkpoint file in the local hard disk after obtaining the checkpoint file, and then sends the checkpoint file to the remote storage system for persistence.

For example, as shown in FIG. 4, in step 401, the second cache module 34 can make a request to the first cache module 32 to forward the checkpoint file. The checkpoint file can be sent by a certain model training module to the second cache module 34. For example, when the second cache module 34 is located on the cache node b shown in FIG. 1, the model training module can be located on the computing node 21 shown in FIG. 1. Certainly, the second cache module 34 can be obtained from a cache node in another site not shown in FIG. 1. In step 402, the first cache module 32 can write the obtained checkpoint file into the local SSD. In step 403, the first cache module 32 further stores the checkpoint file in the remote storage system from the local SSD.

The above-mentioned forwarding solution can achieve a load sharing function. For example, in addition to transmitting the checkpoint file, a second cache node on which the second cache module is located may further need to read, for example, the dataset needed for training from the remote storage system. Therefore, by transferring the checkpoint file to a first cache module on another first cache node, overloading of an IO link between the second cache node and the remote storage system can be avoided. In addition, the forwarding solution may further improve efficiency of transmitting the checkpoint file. For example, the IO link between the second cache node and the remote storage system may use a common line service, and an IO link between the first cache node and the remote storage system may use a dedicated line service. The dedicated line service has a dedicated bandwidth channel, a lower transmission delay, and higher reliability and security. Therefore, even if one or more times of forwarding are performed, it can still be ensured that the efficiency of transmitting the checkpoint file is higher and a shorter time is consumed for transmission.

In addition to forwarding, the first cache module can further back up the checkpoint file from the second cache module, so that the cached checkpoint file is highly available. With reference to the above-mentioned forwarding solution, it is easy to find that there can be a specific association between the forwarding solution and the backup solution here. That is, the same cache module can be configured to forward the checkpoint file, and can simultaneously retain the checkpoint file received by the same cache module, to implement backup. As such, an initial cache module (for example, the second cache module) needs to perform only one time of transmission to the outside, to simultaneously forward and back up the checkpoint file. Certainly, cache modules used for forwarding and backup can alternatively and respectively be different cache modules. Implementations are not limited in this specification.

Corresponding to the system for training an artificial intelligence model, this specification further describes the technical solutions of this specification from the perspective of the first cache module and with reference to FIG. 5.

FIG. 5 is a flowchart illustrating a checkpoint file storage method in a model training scenario, according to some example embodiments. As shown in FIG. 5, the method is applied to a first cache module in a system. A model training module is further deployed in the system, and the model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module. The method includes the following steps.

Step 502: Identify a type of obtained to-be-stored data.

Step 504a: If the type of the to-be-stored data is a dataset, first write the to-be-stored data into a local buffer, and then store the to-be-stored data in a local hard disk from the local buffer.

Step 504b: If the type of the to-be-stored data is a checkpoint file, directly store the to-be-stored data in the local hard disk.

Optionally, the identifying a type of obtained to-be-stored data includes: obtaining a predetermined data feature of the to-be-stored data, and identifying, based on the predetermined data feature, that the type of the to-be-stored data is a dataset or a checkpoint file.

The predetermined data feature includes at least one of the following: data type information included in a name, data type information recorded in metadata of the to-be-stored data, a data format, and a value of a type field in a data transmission protocol.

Optionally, the method further includes: obtaining the to-be-stored data of the dataset type from a remote storage system; and/or writing the to-be-stored data of the checkpoint file type into the remote storage system for persistence.

Optionally, the method further includes: when the to-be-stored data of the checkpoint file type are from the model training module, after the to-be-stored data are written into the local hard disk, performing a notification operation and a storage operation in parallel.

The notification operation is used to return a write success notification for the corresponding checkpoint file to the model training module, and the storage operation is used to further write the corresponding checkpoint file into the remote storage system for persistence.

Optionally, the method further includes: obtaining the to-be-stored data from a second cache node in the system.

As described above, the embodiment shown in FIG. 5 is used to describe the technical solutions of this specification from the perspective of the first cache module. However, related content is actually described above in detail with reference to the embodiments shown in FIG. 1 to FIG. 4. Therefore, for understanding, references can be made to the above-mentioned descriptions. Details are omitted here for simplicity.

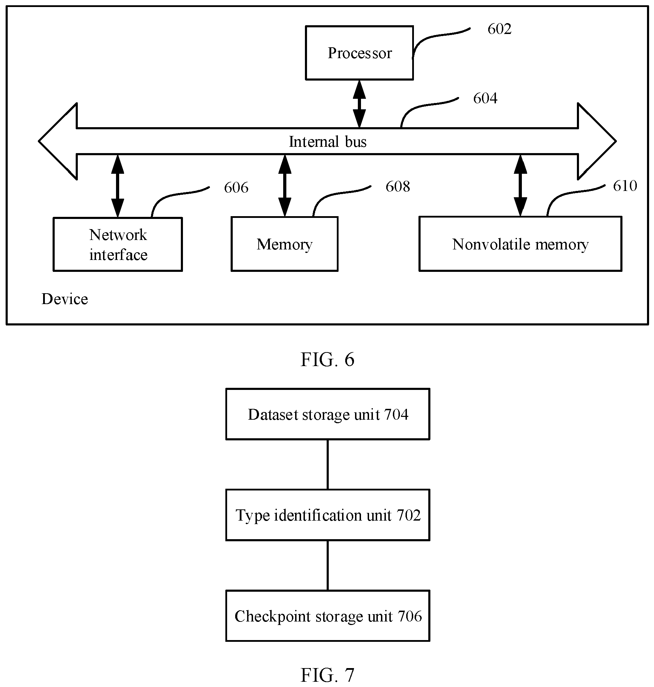

FIG. 6 is a schematic structural diagram illustrating a device, according to some example embodiments. Referring to FIG. 6, in terms of hardware, the device includes a processor 602, an internal bus 604, a network interface 606, a memory 608, and a nonvolatile memory 610, and certainly may further include hardware needed for another function. One or more embodiments of this specification can be implemented in a software-based way. For example, the processor 602 reads a corresponding computer program from the nonvolatile memory 610 into the memory 608, and then runs the computer program. Certainly, in addition to a software implementation, one or more embodiments of this specification do not exclude another implementation, for example, a logic device or a combination of hardware and software. That is, an execution body of the following processing procedure is not limited to each logical unit, and can be hardware or a logic device.

Referring to FIG. 7, a checkpoint file storage apparatus in a model training scenario can be applied to the device shown in FIG. 6, to implement the technical solutions of this specification. The apparatus is applied to a first cache module in a system. A model training module is further deployed in the system, and the model training module is configured to: read a dataset needed for training from the first cache module, to execute a training task of an artificial intelligence model, where computation of the training task is performed by a GPU chip, and in a process of executing the training task, generate a checkpoint file and send the checkpoint file to the first cache module. The apparatus can include: a type identification unit 702, configured to identify a type of obtained to-be-stored data; a dataset storage unit 704, configured to: if the type of the to-be-stored data is a dataset, first write the to-be-stored data into a local buffer, and then store the to-be-stored data in a local hard disk from the local buffer; and a checkpoint storage unit 706, configured to: if the type of the to-be-stored data is a checkpoint file, directly store the to-be-stored data in the local hard disk.

Optionally, the type identification unit 702 is specifically configured to: obtain a predetermined data feature of the to-be-stored data, and identify, based on the predetermined data feature, that the type of the to-be-stored data is a dataset or a checkpoint file.

The predetermined data feature includes at least one of the following: data type information included in a name, data type information recorded in metadata of the to-be-stored data, a data format, and a value of a type field in a data transmission protocol.

Optionally, the apparatus further includes: a first data acquisition unit, configured to obtain the to-be-stored data of the dataset type from a remote storage system; and/or a data write unit, configured to write the to-be-stored data of the checkpoint file type into the remote storage system for persistence.

Optionally, the apparatus further includes: a parallel execution unit, configured to: when the to-be-stored data of the checkpoint file type are from the model training module, after the to-be-stored data are written into the local hard disk, perform a notification operation and a storage operation in parallel.

The notification operation is used to return a write success notification for the corresponding checkpoint file to the model training module, and the storage operation is used to further write the corresponding checkpoint file into the remote storage system for persistence.

Optionally, the apparatus further includes: a second data acquisition unit, configured to obtain the to-be-stored data from a second cache node in the system.

Based on the same concept as the above-mentioned method, this specification further provides an electronic device, including: a processor; and a storage, configured to store instructions executable by the processor. The processor runs the executable instructions to implement the steps of the method in any one of the above-mentioned embodiments.

Based on the same concept as the above-mentioned method, this specification further provides a computer-readable storage medium. The computer-readable storage medium stores computer instructions, and when the instructions are executed by a processor, the steps of the method in any one of the above-mentioned embodiments are implemented.

Based on the same concept as the above-mentioned method, this specification further provides a computer program product, including a computer program/instructions. When the computer program/instructions is/are executed by a processor, the steps of the method in any one of the above-mentioned embodiments are implemented.

### EXAMPLES

1. A system for training an artificial intelligence model, comprising a model training module and a first cache module, wherein
   the model training module is configured to: read a dataset needed for training from the first cache module, to execute a training task of an artificial intelligence model, wherein computation of the training task is performed by a GPU chip, and in a process of executing the training task, generate a checkpoint file and send the checkpoint file to the first cache module; and
   the first cache module is configured to: identify a type of obtained to-be-stored data; and if the type of the to-be-stored data is a dataset, first write the to-be-stored data into a local buffer, and then store the to-be-stored data in a local hard disk from the local buffer; or if the type of the to-be-stored data is a checkpoint file, directly store the to-be-stored data in the local hard disk.
2. The system according to example 1, wherein the first cache module is configured to identify the type of the obtained to-be-stored data, comprising:
   obtaining a predetermined data feature of the to-be-stored data, and identifying, based on the predetermined data feature, that the type of the to-be-stored data is a dataset or a checkpoint file, wherein
   the predetermined data feature comprises at least one of the following:
      data type information comprised in a name, data type information recorded in metadata of the to-be-stored data, a data format, and a value of a type field in a data transmission protocol.
3. The system according to example 1, wherein the first cache module is further configured to:
   obtain the to-be-stored data of the dataset type from a remote storage system; and/or write the to-be-stored data of the checkpoint file type into the remote storage system for persistence.
4. The system according to example 3, wherein the first cache module is further configured to:
   when the to-be-stored data of the checkpoint file type are from the model training module, after the to-be-stored data are written into the local hard disk, perform a notification operation and a storage operation in parallel, wherein
   the notification operation is used to return a write success notification for the corresponding checkpoint file to the model training module, and the storage operation is used to further write the corresponding checkpoint file into the remote storage system for persistence.
5. The system according to example 1, wherein the first cache module is further configured to:
   obtain the to-be-stored data from a second cache node in the system.
6. The system according to example 1, wherein the cache module comprised in the system is deployed on an all-flash cache node.
7. A checkpoint file storage method in a model training scenario, applied to a first cache module in a system, wherein a model training module is further deployed in the system, and the model training module is configured to: read a dataset needed for training from the first cache module, to execute a training task of an artificial intelligence model, wherein computation of the training task is performed by a GPU chip, and in a process of executing the training task, generate a checkpoint file and send the checkpoint file to the first cache module; and the method comprises:
   identifying a type of obtained to-be-stored data; and
   if the type of the to-be-stored data is a dataset, first writing the to-be-stored data into a local buffer, and then storing the to-be-stored data in a local hard disk from the local buffer; or
   if the type of the to-be-stored data is a checkpoint file, directly storing the to-be-stored data in the local hard disk.
8. The method according to example 7, wherein the identifying a type of obtained to-be-stored data comprises:
   obtaining a predetermined data feature of the to-be-stored data, and identifying, based on the predetermined data feature, that the type of the to-be-stored data is a dataset or a checkpoint file, wherein
   the predetermined data feature comprises at least one of the following:
      data type information comprised in a name, data type information recorded in metadata of the to-be-stored data, a data format, and a value of a type field in a data transmission protocol.
9. The method according to example 7, further comprising:
   obtaining the to-be-stored data of the dataset type from a remote storage system; and/or
   writing the to-be-stored data of the checkpoint file type into the remote storage system for persistence.
10. The method according to example 9, further comprising:
   when the to-be-stored data of the checkpoint file type are from the model training module, after the to-be-stored data are written into the local hard disk, performing a notification operation and a storage operation in parallel, wherein
   the notification operation is used to return a write success notification for the corresponding checkpoint file to the model training module, and the storage operation is used to further write the corresponding checkpoint file into the remote storage system for persistence.
11. The method according to example 7, further comprising:
   obtaining the to-be-stored data from a second cache node in the system.
12. An electronic device, comprising: a processor; and a storage, configured to store instructions executable by the processor, wherein the processor runs the executable instructions to implement the steps of the method according to any one of examples 7 to 11.
13. A computer-readable storage medium, wherein the computer-readable storage medium stores computer instructions, and when the instructions are executed by a processor, the steps of the method according to any one of examples 7 to 11 are implemented.
14. A computer program product, comprising a computer program/instructions, wherein when the computer program/instructions is/are executed by a processor, the steps of the method according to any one of examples 7 to 11 are implemented.

## Claims

1. A system for training an artificial intelligence model, the system comprising a model training module and a first cache module, wherein
the model training module is configured to:
read a dataset needed for training from the first cache module, to execute a training task of an artificial intelligence model; and
in a process of executing the training task, generate a checkpoint file and send the checkpoint file to the first cache module; and wherein:
the first cache module is configured to:
identify a type of obtained to-be-stored data; and
i) if the type of the to-be-stored data is a dataset, first write the to-be-stored data into a local buffer, and then store the to-be-stored data in a local hard disk from the local buffer; or
ii) if the type of the to-be-stored data is a checkpoint file, directly store the to-be-stored data in the local hard disk.

2. The system according to claim 1, wherein the training task is executed by a graphic processing unit (GPU).

3. The system according to claim 1, wherein the first cache module is configured to identify the type of the obtained to-be-stored data by performing operations comprising:
obtaining a predetermined data feature of the to-be-stored data, and
identifying, based on the predetermined data feature, that the type of the to-be-stored data is a dataset or a checkpoint file, wherein
the predetermined data feature comprises at least one of data type information comprised in a name, data type information recorded in metadata of the to-be-stored data, a data format, or a value of a type field in a data transmission protocol.

4. The system according to claim 1, wherein the first cache module is further configured to:
obtain the to-be-stored data of the dataset type from a remote storage system; and/or
write the to-be-stored data of the checkpoint file type into the remote storage system for persistence.

5. The system according to claim 4, wherein the first cache module is further configured to:
when the to-be-stored data of the checkpoint file type are from the model training module, after the to-be-stored data are written into the local hard disk, perform a notification operation and a storage operation in parallel, wherein
the notification operation is used to return a write success notification for the corresponding checkpoint file to the model training module, and the storage operation is used to further write the corresponding checkpoint file into the remote storage system for persistence.

6. The system according to claim 1, wherein the first cache module is further configured to:
obtain the to-be-stored data from a second cache node in the system.

7. The system according to claim 1, wherein the first cache module is deployed on an all-flash cache node.

8. A checkpoint file storage method in a model training scenario, applied to a first cache module in a system, wherein the system comprises the first cache module and a model training module, the method comprising:
providing, to the model training module, a dataset needed for executing a training task;
obtaining, from the model training module, a checkpoint file generated by the model training module in a process of executing the training task;
identifying a type of obtained to-be-stored data; and
i) if the type of the to-be-stored data is a dataset, first writing the to-be-stored data into a local buffer, and then storing the to-be-stored data in a local hard disk from the local buffer; or
ii) if the type of the to-be-stored data is a checkpoint file, directly storing the to-be-stored data in the local hard disk.

9. The method according to claim 8, wherein identifying a type of obtained to-be-stored data comprises:
obtaining a predetermined data feature of the to-be-stored data, and identifying, based on the predetermined data feature, that the type of the to-be-stored data is a dataset or a checkpoint file, wherein
the predetermined data feature comprises data type information comprised in a name, data type information recorded in metadata of the to-be-stored data, a data format, or a value of a type field in a data transmission protocol.

10. The method according to claim 8, further comprising:
obtaining the to-be-stored data of the dataset type from a remote storage system; and/or
writing the to-be-stored data of the checkpoint file type into the remote storage system for persistence.

11. The method according to claim 10, further comprising:
when the to-be-stored data of the checkpoint file type are from the model training module, after the to-be-stored data are written into the local hard disk, performing a notification operation and a storage operation in parallel, wherein
the notification operation is used to return a write success notification for the corresponding checkpoint file to the model training module, and the storage operation is used to further write the corresponding checkpoint file into the remote storage system for persistence.

12. The method according to claim 8, further comprising:
obtaining the to-be-stored data from a second cache node in the system.

13. An electronic device, comprising:
a processor; and
a storage, configured to store instructions which, when executed by the processor, cause the processor to implement the method according to any one of claims 8 to 12.

14. A computer-readable storage medium comprising instructions which, when the instructions are executed by a processor, cause the processor to perform operations comprising the method according to any one of claims 8 to 12.

15. A computer program product comprising instructions which, when the instructions are executed by a processor, cause the processor to perform operations comprising the method according to any one of claims 8 to 12.
